# EUROPEAN PATENT APPLICATION

(11) **EP 2 614 871 A1**
(43) Date of publication of application: **17.07.2013**
(21) Application number: 11195370.9
(22) Date of filing: 22.12.2011
(51) Int. Cl.: B01D 46/24, F01N 3/022

(54) **Filter assembly and filter element for such an assembly**

(71) Applicant: Shell Internationale Research Maatschappij B.V., 2596 HR The Hague (NL)
(72) Inventor: van Elburg, Gerhard Johan, 1031 HW Amsterdam (NL); van Gemert, Daan Joseph, 1031 HW Amsterdam (NL); Jancker, Steffen, 1031 HW Amsterdam (NL)
(74) Representative: Matthezing, Robert Maarten

(57) **Abstract**

Filter element (13, 20, 30, 40, 50) with a tubular wall (14, 22) of a rigid porous material. The filter element has an open end (15, 32, 55) and a closed end (16, 33, 52) and one or more stabilizing members (21, 31, 41, 51) extending over at least a part of the length of the filter element. The stabilizing members can for instance be reinforcement rods embedded in the tubular wall. Filter assembly (1) comprising such filter elements.

## Description

The invention pertains to a tubular filter element, such as a candle filter element, with a tubular wall of a rigid porous material, the filter element having an open end and a closed end. The invention also pertains to a filter assembly comprising one or more of such filter elements.

Such candle filters can for instance be used for the removal of fine ash or slag particles from raw synthesis gas leaving a gasifier for the gasification of a carbonaceous fuel before the gas is transported downstream for cooling and further processing. The recovered fly ash and slag particles can either be recycled to the gasifier or discharged as a by-product.

Filtration of hot synthesis gas is generally performed with ceramic filter elements. If such a filter element breaks unfiltered gas passes the filtration assembly which can cause damage to downstream equipment. In addition, if the filter element breaks, it can tip over to lie against an adjacent filter element. This can cause breakage of the adjacent filter element. It can also cause filtrate bridges formed by fly ash building up between two adjacent filter elements. Forces exerted by such filtrate bridges can result in breakage of filter elements.

It is an object of the invention to reduce the risk of damage of downstream equipment caused by unfiltered gas.

This is achieved by the present invention by using a filter element with a tubular wall of a rigid porous material, the filter element having an open end and a closed end and one or more stabilizing members extending over at least a part of the length of the filter element.

In case of breakage the one or more stabilizing members will stabilize the broken filter element and prevent or limit tipping over. Therefore, the breakthrough of raw unfiltered gas will be very limited. Downstream equipment is better protected and the risk of downtime of the unit as a whole is substantially reduced.

The stabilizing members can for example be reinforcement members embedded in the tubular wall. Suitable reinforcement members are for example metal bars or rods, such as steel rods, or a mesh or other suitable types of reinforcement. In a refinement, the filter element may comprise a plurality of reinforcement rods equidistantly arranged over the cross section of the filter element wall.

Alternatively, or additionally, the stabilizing members can be provided as separate parts at the inner side of the filter element. Such separate stabilizing members can for example comprise one or more metal bars or rods, e.g., steel rods, which may be equidistantly arranged. Optionally, such rods can be interconnected by transversal rods to form a truss which can be placed with a narrow fit within the tubular filter element. In a further embodiment, a V-shaped element with longitudinally extending legs can be positioned in a resiliently clamping manner within the filter element.

The stabilizing members may for instance extend over the full length of the filter element or over at least a part of the length.

In a suitable embodiment, the reinforcement members extend parallel to the longitudinal axis of the filter element. Alternatively, they may for example be spiraling.

The invention also pertains to a filter assembly comprising one or more of the disclosed filter elements. Such a filter assembly may for example comprise a filter house with an inner chamber partitioned by a tube sheet into an inlet compartment with an inlet and an outlet compartment with a filtrate outlet, wherein the tube sheet is provided with openings, each opening being connected to a tubular filter element, as disclosed above. The openings will typically be regularly spaced, e.g., in a circular array. The filter elements will typically extend from the tube sheet into the inlet compartment.

In use gas will flow from the inlet into the inlet compartment between the filter elements. The pressure in the inlet compartment will typically be about 20 - 40 barg.

The gas will pass the porous filter membrane wall to enter the internal cavity of the tubular filter elements as a filtered gas. From there the filtered gas will flow via the outlet compartment away via the outlet. Fly ash particles will remain as a retentate on the outer surface of the filter elements. The filter elements can be cleaned regularly, e.g., by a reverse back-flow.

Exemplary embodiments will be further described under reference to the accompanying drawings. In the drawings:
- Figure 1:: shows schematically in cross section an exemplary embodiment of a filter assembly;
- Figure 2:: shows a broken filter according to the prior art;
- Figure 3A:: shows an exemplary embodiment of a filter element according to the invention;
- Figure 3B:: shows the filter element of Figure 3A in a broken state;
- Figure 4:: shows a longitudinal cross section of a second exemplary embodiment of a filter element;
- Figure 5A:: shows a third exemplary embodiment of a filter element;
- Figure 5B:: shows a separate reinforcement member of the filter element of Figure 5A;
- Figure 6:: shows a longitudinal cross section of a fourth exemplary embodiment of a filter element.

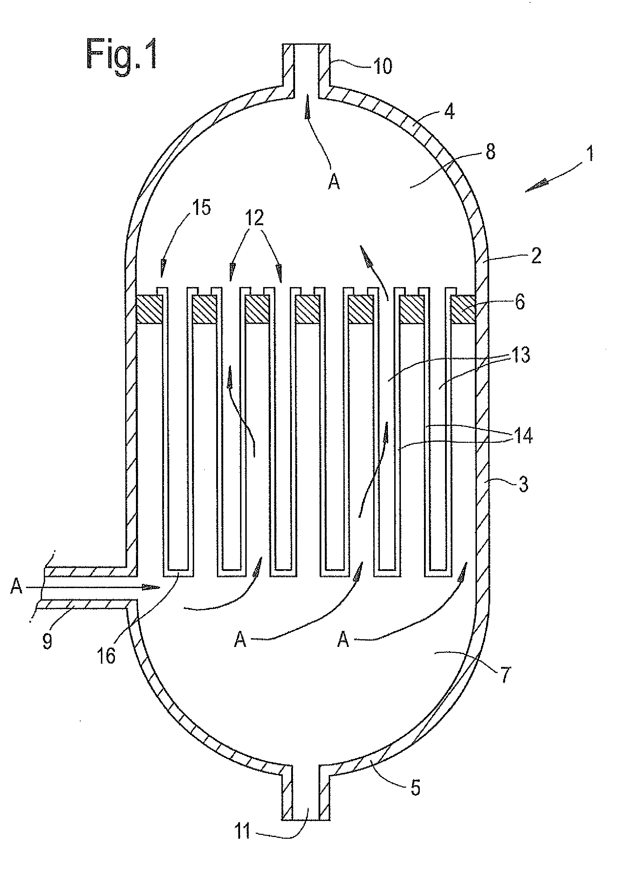

Figure 1 is a schematic representation of an exemplary embodiment of a filter assembly 1 with a filter house 2 with a cylindrical main body 3 and dome shaped upper and lower ends 4, 5. The filter house 2 encloses an inner chamber partitioned by a tube sheet 6 separating an inlet compartment 7 from an outlet compartment 8. The inlet compartment 7 is connected to a gas supply by means of a gas inlet 9. The outlet compartment 8 is connected to discharge for filtered gas via an outlet 10. The inlet compartment further comprises a retentate outlet 11.

The tube sheet 6 comprises an array of openings 12. Each of these openings 12 is connected to a respective tubular filter element 13. Each tubular filter element 13 comprises a tubular wall 14 of a rigid porous material. The filter elements 13 have an open end 15 opening into the outlet compartment 8 and an opposite closed end 16 extending into the inlet compartment 7.

In operation raw gas flows via the inlet 9 into the inlet compartment 7, as indicated with Arrows A in Figure 1. There the gas passes the walls 14 of the filter elements 13. The filter elements 13 filter fly ash and other possible contaminant particles out of the gas. The filtered gas flows into the outlet compartment 8 and further away via the outlet 10 to downstream equipment (not shown).

The filter elements 13 can for instance be cleaned by a back flow to loosen the retentate fouling. Foulings and filter cakes of retentate fall from the filter elements 13 and can be removed via the retentate outlet 11.

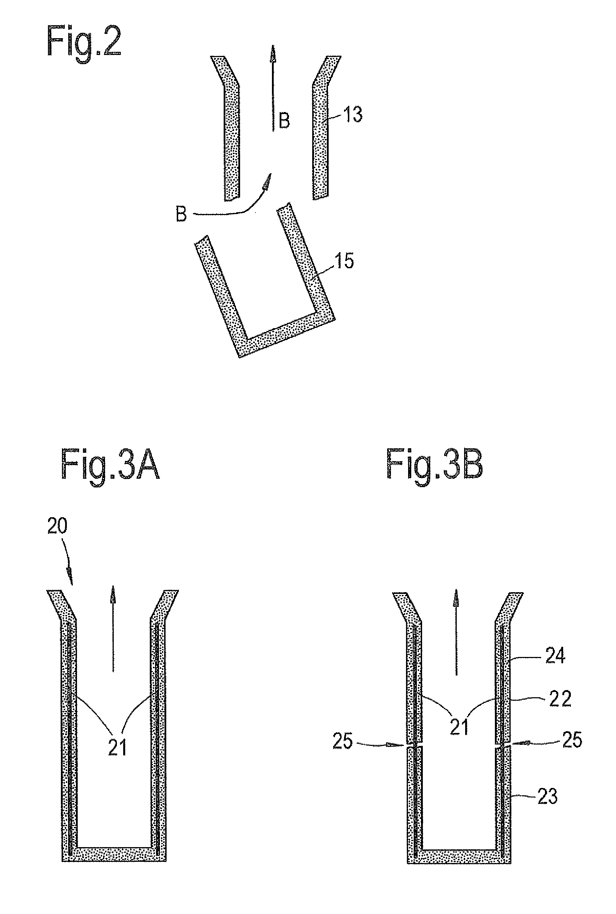

The filter elements 13 are typically made of a porous ceramic material. During operation these filter elements 13 can break and the broken end 15 (see Figure 2) can tip over. Unfiltered gas can then freely flow from the inlet compartment into the outlet compartment 8, as indicated by Arrows B in Figure 2.

Figure 3A shows an exemplary embodiment of a filter element 20 according to the invention. This filter element 20 comprises embedded reinforcement rods or bars 21 of a non-porous material, such as a metal, in particular steel. The reinforcement rods 21 extend in a direction parallel to the longitudinal axis of the filter element 20. The rods 21 are equidistantly distributed over the cross section of the filter element wall 22 in a circular array. If the filter element 20 breaks, the broken parts 23, 24 (see Figure 3B) are held together by the reinforcement rods 21. This way, the broken end 23 will not tip over. Gaps 25 between the broken parts 23, 24 resulting from the break are too small for passage of significant amounts of unfiltered gas.

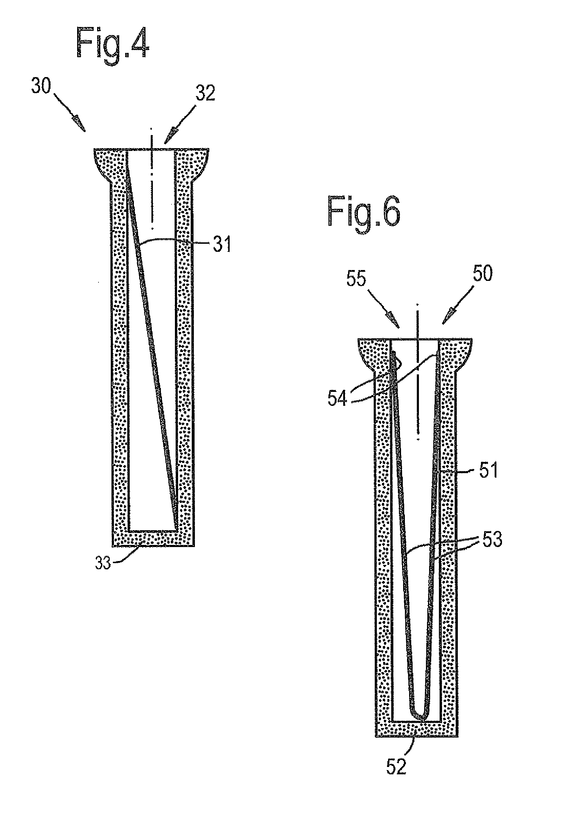

Figure 4 shows a further possible filter element 30 comprising a single stabilizing rod 31 provided at the inner side of the tubular filter element 30. The stabilizing rod 31 is a separate, loose part extending between the open end 32 and the closed end 33 of the tubular filter element 30. If the filter element 30 would break, the rod 31 restricts the possible angle of tipping over.

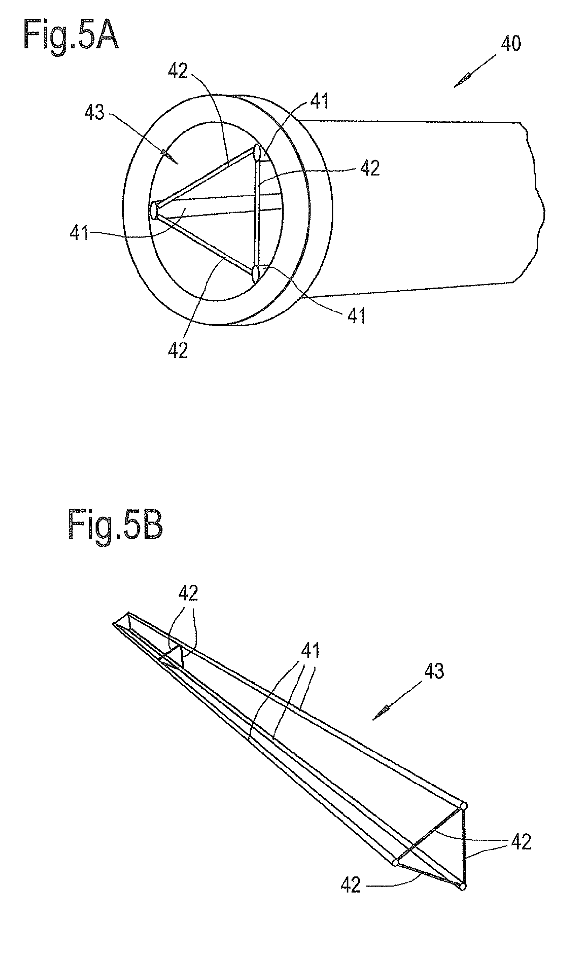

Alternatively, the filter element may comprise more than one stabilizing rod, e.g., a plurality of equidistant parallel stabilizing rods, optionally linked, e.g., by transversal rods, as is shown in Figure 5A. This Figure shows a filter element 40 with three equidistant parallel stabilizing rods 41 positioned within the inner side of the tubular filter element 40. The stabilizing rods 41 are interconnected by transversal rods 42 to form a truss 43 with a triangular cross section, as shown in Figure 5B.

Figure 6 shows a longitudinal cross section of a further alternative embodiment of a cylindrical filter element 50. A stabilizing member 51 is inserted into the filter element 50. The stabilizing member 51 is a V-shaped steel rod pointing to the closed end 52 of the filter element 50. The two legs 53 of the V-shape have outer ends 54 near the open end 55 of the filter element 50. The V-shaped rod 51 can be made such that, before being placed into the filter element 50, the distance between the two outer ends 54 of the V-shape exceed the inner diameter of the filter element 50. When the V-shaped rod 51 is positioned within the filter element 50, the legs 53 of the V-shape are pushed toward each other. This way, the V-shaped rod 51 clings within the filter element 50 in a resiliently prestressed manner.

## Claims

1. Filter element (13, 20, 30, 40, 50) with a tubular wall (14, 22) of a rigid porous material, the filter element having an open end (15, 32, 55) and a closed end (16, 33, 52) and one or more stabilizing members (21, 31, 41, 51) extending over at least a part of the length of the filter element.

2. Filter element according to claim 1 wherein the stabilizing members comprise one or more reinforcement members (21) embedded in the tubular wall (22).

3. Filter element according to any one of the preceding claims, wherein the stabilizing members (21, 31) are metal rods.

4. Filter element according to claim 1 or 2 wherein at least a part of the stabilizing members (31, 41, 51) are provided at the inner side of the filter element.

5. Filter element according to any one of the preceding claims wherein the stabilizing member (41) comprises a truss (44) and/or a rod (51) with a V-shaped cross section placed with a narrow fit within the tubular filter element.

6. Filter element according to any one of the preceding claims wherein the stabilizing members (21, 31, 41, 51) extend over the full length of the filter element.

7. Filter element according to any one of the preceding claims, wherein at least part of the stabilizing members (21, 31, 41, 51) extend parallel to the longitudinal axis of the filter element.

8. Filter element according to any one of the preceding claims, wherein at least part of the stabilizing members extend spiraling.

9. Filter element according to any one of the preceding claims, wherein the filter element comprises a plurality of equidistantly arranged stabilizing members (21, 41).

10. Filter assembly (1) comprising a filter house (2) with an inner chamber partitioned by a tube sheet (6) separating an inlet compartment (7) with an inlet (9) and an outlet compartment (8) with a filtrate outlet (10), wherein the tube sheet is provided with openings, each opening being connected to a tubular filter element (13, 20, 30, 40, 50) according to any one of claims 1 - 9.

11. Filter assembly according to claim 10 wherein the filter elements (13, 20, 30, 40, 50) extend from the tube sheet (6) into the inlet compartment (7).
